# EUROPÄISCHE PATENTSCHRIFT

(11) **EP 3 502 584 B1**
(45) Veröffentlichungstag und Bekanntmachung des Hinweises auf die Patenterteilung: **21.04.2021**
(21) Anmeldenummer: 18213130.0
(22) Anmeldetag: 17.12.2018
(51) Int. Cl.: F24T 10/17

(54) **WÄRMEAUSTAUSCHSONDE**
HEAT TRANSFER PROBE
SONDE D'ÉCHANGE DE CHALEUR

(30) Priorität: 20.12.2017 DE 102017223345
(43) Veröffentlichungstag der Anmeldung: 26.06.2019
(73) Patentinhaber: Rheinisch-Westfälische Technische Hochschule Aachen, 52062 Aachen (DE)
(72) Erfinder: Müller, Dirk, 52074 Aachen (DE)
(74) Vertreter: dompatent von Kreisler Selting Werner - Partnerschaft von Patent- und Rechtsanwälten mbB

(56) Entgegenhaltungen:
- EP-A2- 2 136 157
- DE-A1-102005 011 239
- DE-A1-102009 011 092
- DE-A1-102012 011 670
- DE-A1-102016 203 865
- DE-U1-202007 006 682
- US-A- 4 741 386

## Beschreibung

### Gebiet der Erfindung

Die Erfindung betrifft eine Wärmeaustauschsonde um wahlweisen Wärmeentzug oder Wärmeeintrag aus oder in eine Umgebung, eine Anlage mit mindestens einer solchen Wärmeaustauschsonde sowie ein entsprechendes Verfahren zum Betrieben der Anlage mit Wärmeaustauschsonde.

### Hintergrund der Erfindung

Übliche Erdwärmesonden (EWS) sind Wärmetauscher, die im Untergrund installiert werden, um Wärme aus dem Untergrund mittels Wärmeübertrag zu entziehen. Bekannte Erdwärmesonden stellen geschlossene mit einer Wärmeträgerflüssigkeit gefüllte Rohrsysteme dar, die in der Regel in ein vertikal oder gegebenenfalls schräg angeordnetes Bohrloch in den Untergrund (Umgebung) eingebracht werden. Mit der Erdwärmesonde wird aus dem Erdloch Wärme entzogen, die meist an den Wärmetauschern (Verdampfer) einer Erdwärmepumpe weitergegeben wird. Mit Hilfe der Wärmepumpe ist eine wirtschaftliche Nutzung der Erdwärme beispielsweise zur Gebäudeheizung möglich. Neben sogenannten U-Sonden oder Doppel-U-Sonden werden auch sogenannte Koaxialsonden, bei denen Vor- und Rücklauf beziehungsweise Auf- und Abstieg der Wärmeträgerflüssigkeit im Innenrohr und im Zwischenraum zwischen Innenrohr und Außenrohr erfolgt.

DE 20 2008 002 893 U1 offenbart eine solche Erdwärmesonde mit koaxialer Anordnung zur Aufnahme von Erdwärme, bei der ein Wärmeaustausch zwischen Vor- und Rücklauf über die Wand des Innenrohrs verringert werden soll, um den Wärmeaustausch mit der Umgebung der Erdwärmesonde möglichst effektiv zu gestalten. Damit dabei die Strömungsgeschwindigkeit des Wärmeaustauschmediums beim Rücklauf durch das Innenrohr nicht zu gering und somit das vorlaufende Wärmeaustauschmedium nicht zu stark erwärmt wird, besitzt das Innenrohr einen möglichst kleinen Querschnitt. Findet Vor- und Rücklauf zudem mit einer homogenen Strömung statt, entstehen Verluste bei der Energieaufnahme. Um die Strömung in eine nicht-homogene Strömung überzuführen besitzt die Erdwärmesonde zwischen Vor- und Rücklauf ein Verwirbelungselement.

Durch das Verwirbelungselement besitzt die Erdwärmesonde einen komplizierten Aufbau. Das Verwirbelungselement wirkt zudem nur für die Strömungen vorteilhaft, die in die Strömungsrichtung strömen, für die das Verwirbelungselement ausgelegt ist. Bei einer Strömungsumkehr würde das Verwirbelungselement nicht in der vorgesehenen Weise wirken und daher die Effektivität des Wärmeaustausches wieder verringern. Außerdem wäre es wünschenswert, eine Erdwärmesonde flexibel sowohl für die Aufnahme von Wärme aus dem Erdreich als auch für die Abgabe von Wärme in das Erdreich zu verwenden. Ein solcher umgekehrter Betrieb mit hoher Effizienz ist mit obiger Erdwärmesonde nicht möglich. Wünschenswert wäre eine entsprechende Sonde nicht nur für den Austausch von Wärme mit dem Erdboden, sondern auch mit anderen Umgebungen

DE 10 2012 011670 A1 offenbart eine Wärmeaustauschsonde gemäß dem Oberbegriff des Anspruchs 1.

### Zusammenfassung der Erfindung

Es ist daher eine Aufgabe der Erfindung, eine Wärmeaustauschsonde zur Verfügung zu stellen, die einen effektiven Betrieb sowohl zum Wärmeentzug aus einer Umgebung als auch für einen Wärmeeintrag in die Umgebung gleichermaßen geeignet und obendrein einfach aufgebaut ist.

Diese Aufgabe wird gelöst durch eine Wärmeaustauschsonde zur Einbringung in eine Umgebung wahlweise für einen Wärmeentzug oder einen Wärmeeintrag aus oder in die Umgebung um die Wärmeaustauschsonde herum, umfassend ein Außenrohr mit einem ersten und zweiten Ende und ein im Außenrohr angeordnetes sich entlang des Außenrohrs erstreckendes Innenrohr mit einem geeigneten Außendurchmesser zur Bildung eines Ringspaltes zwischen Innen- und Außenrohr, wobei das Innenrohr mit seiner Innenseite eine innere erste Leitung bildet und die Wärmeaustauschsonde eine zusätzliche zweite Leitung separat von der ersten Leitung umfasst, wobei die ersten und zweiten Leitungen zumindest im Bereich des ersten Endes in geeigneter Weise mit dem Ringspalt verbunden sind und die Wärmeaustauschsonde bei einem gewünschten Wärmeentzug aus der Umgebung zur Zufuhr eines Wärmeaustauschmediums durch die erste Leitung zum Ringspalt und zur Rückführung des Wärmeaustauschmediums durch den Ringspalt zu dem zweiten Ende und bei einem gewünschten Wärmeeintrags in die Umgebung die Wärmeaustauschsonde zur Zuführung des Wärmeaustauschmediums durch den Ringspalt zur zweiten Leitung und zur Rückführung des Wärmeaustauschmediums zum zweiten Ende durch die zweite Leitung ausgestaltet ist, wobei die zweite Leitung innerhalb der ersten Leitung angeordnet ist oder das Innenrohr eine Wand mit geeigneter Wanddicke umfasst und die zweite Leitung innerhalb der Wand des Innenrohrs angeordnet ist.

Als Umgebung wird jede Art von Material um die Wärmeaustauschsonde herum bezeichnet, in das die Wärmeaustauschsonde zum Wärmeentzug aus oder Wärmeeintrag in die betreffende Umgebung eingebracht ist. Diese Umgebung kann beispielsweise Erdreich oder anderes Material außerhalb des Erdreichs sein. Die Umgebung kann dabei fest, flüssig oder gasförmig sein. Als Außenrohr oder Innenrohr werden alle Arten von rohrförmigen Anordnungen bezeichnet. Eine rohrförmige Anordnung ist ein länglicher Hohlkörper, dessen Länge wesentlich größer als sein Durchmesser ist, wobei die beiden Enden der rohrförmigen Anordnungen jeweils offen oder zumindest ein Ende geschlossen sein kann. Bei der erfindungsgemäßen Wärmeaustauschsonde ist zumindest das erste Ende (unteres Ende bei vertikalen Einbringung der Wärmeaustauschsonde von oben in die Umgebung) des Außenrohres geschlossen. Die zusätzliche zweite Leitung kann dabei ebenfalls als rohrförmige Anordnung oder Schlauch ausgeführt sein. Während Rohre aus zumeist wenig flexiblem Material gefertigt sind, können Schläuche auch aus besonders flexiblem Material gefertigt sein. Die zusätzliche zweite Leitung ist eine zumindest im Bereich des ersten Endes des Außenrohrs offene Leitung. Die zweite Leitung kann dabei einen je nach Ausführungsform der Wärmeaustauschsonde unterschiedlichen Verlauf in der Wärmeaustauschsonde besitzen. Die zweite Leitung ist innerhalb der ersten Leitung, oder innerhalb der Wand des Innenrohrs angeordnet. Die Größe des Ringspalts ist dabei auf die Menge des umlaufenden Wärmeaustauschmediums angepasst. Bei einem engen Ringspalt relativ zur wärmeübertagenden Fläche (Außenseite) des Außenrohrs bei möglichst geringer Wandstärke des Außenrohrs (guter Wärmekontakt zur Umgebung) kann der Wärmeaustausch mit dem Wärmeaustauschmedium sehr effizient gestaltet werden. Die Querschnittsformen und Flächen von Ringspalt und erster und zweiten Leitung können geeignet gewählt werden, um die Effizienz des Wärmeaustausches mit der Umgebung zu steigern als auch die Verluste zwischen Wärmeübertrag zwischen zu- und Rücklauf zu minimieren. Der einfache Aufbau aus drei Verbindungen (Ringspalt, erste und zweite Leitungen) ohne weitere benötigte Komponenten wie beispielsweise ein zusätzliches Verwirbelungselement am ersten Ende der Wärmeaustauschsonde ermöglicht zudem eine einfache Fertigung der Wärmeaustauschsonde.

Das Wärmeaustauschmedium wird in der erfindungsgemäßen Wärmeaustauschsonde bei einer Medientemperatur kleiner als die Umgebungstemperatur durch eine erste Leitung zu dem Ringspalt zugeführt und in gutem thermischen Kontakt mit der Umgebung für einen Wärmeübertrag aus der Umgebung (Wärmeentzug) in das Wärmeaustauschmedium (Wärmeeintrag) durch den Ringspalt rückgeführt. Dabei kann die zweite Leitung ohne Funktion bleiben oder zu einem zusätzlichen Transport des Wärmeaustauschmediums zusätzlich zur ersten Leitung verwendet werden (additiver Transport). Bei einer Medientemperatur höher als die Umgebungstemperatur wird das Wärmeaustauschmedium durch den Ringspalt in gutem thermischen Kontakt mit der Umgebung für einen Wärmeübertrag aus dem Wärmeaustauschmedium (Wärmeentzug) in die Umgebung (Wärmeeintrag) zur zweiten Leitung hingeführt und durch die zweite Leitung rückgeführt. Durch die Verwendung der zusätzlichen zweiten Leitung für das Wärmeaustauschmedium ist sowohl ein Wärmeentzug aus der Umgebung als auch ein Wärmeeintrag in die Umgebung mit hoher Effizienz und als auch ein Betrieb mit geringen Verlusten durch Wärmeübertrag zwischen Zulauf (Zufuhrweg) und Rücklauf (Rückführweg) durch ein und dieselbe Wärmeaustauschsonde möglich.

Die Wärmeaustauschsonde ermöglicht somit einen effektiven Betrieb sowohl zum Wärmeentzug aus einer Umgebung als auch für einen Wärmeeintrag in die Umgebung gleichermaßen und ist obendrein einfach aufgebaut.

Erfindungsgemäß ist die zweite Leitung innerhalb der ersten Leitung angeordnet oder das Innenrohr umfasst eine Wand mit geeigneter Wanddicke und die zweite Leitung ist innerhalb der Wand des Innenrohrs angeordnet. Dadurch ist die zweite Leitung separat vom Ringspalt in der Wärmeaustauschsonde angeordnet, was den Wärmeübertrag zwischen Vor- und Rücklauf und damit die Verluste beim Wärmeübertrag zur Umgebung verringert. Außerdem kann das Innenrohr zur Führung der zweiten Leitung verwendet werden, was den Aufbau der Wärmeaustauschsonde vereinfacht.

In einer Ausführungsform ist das Innenrohr mit dem Außenrohr über geeignete Verbindungselemente verbunden. Durch die Verbindungselemente wird die Größe des Ringspaltes lokal oder bei entsprechend vielen Verbindungselementen über die gesamte Länge der Wärmeaustauschsonde definiert, um lokal oder über deren gesamte Länge einen optimierten Wärmeaustausch zwischen des Wärmeaustauschmediums im Ringspalt und der Umgebung an der Außenseiten des Außenrohrs zu gewährleisten. In einer bevorzugten Ausführungsform zentrieren die Verbindungselemente das Innenrohr im Außenrohr. Somit kann der Wärmeaustausch unabhängig von der Orientierung der Wärmeaustauschsonde in jede Richtung zur Umgebung optimiert werden. Die Verbindungselemente können für die Konstanthaltung des Abstands zwischen Innen- und Außenrohr jede dafür geeignete Form besitzen, sofern die Verbindungselemente den Fluss des Wärmeaustauschmediums durch den Ringspalt nicht übermäßig behindern. Beispielsweise sind die Verbindungselemente Stifte, die senkrecht auf der Außenseite des Innenrohrs beziehungsweise senkrecht auf der Innenseite des Außenrohres angeordnet sind.

In einer Ausführungsform ist das Innenrohr aus einem leichten Material mit oder ohne Hohlräume innerhalb des Materials gefertigt. Somit kann das Innenrohr leicht in das Außenrohr eingebracht werden. Die resultierende Wärmeaustauschsonde ist leichter und kann somit besser transportiert und in ein Bohrloch in die Umgebung eingebracht werden. In einer bevorzugten Ausführungsform ist das leichte Material Kunststoff, vorzugsweise ein geschlossener Schaum. Kunststoffe, insbesondere geschlossene Schäume, stellen zudem ein wärmeisolierendes Material dar, wodurch der Wärmeübertrag zwischen Vor- und Rücklauf in der Wärmeaustauschsonde minimiert werden kann. Der Begriff "geschlossener Schaum" bezeichnet ein Material aus einzelnen Schaumblasen mit weiteren Schaummaterial zwischen den Blasen, wobei die Blasen selbst geschlossen sind, sodass ein geschlossener Schaum im Gegensatz zu offenen Schäumen wie beispielsweise Schwämmen kein Medium, insbesondere kein Wärmeaustauschmedium, aufnehmen kann.

In einer weiteren Ausführungsform besitzt das Innenrohr zum Außendurchmesser einen Innendurchmesser, wobei der Außendurchmesser mindestens einen Faktor 1,5, vorzugsweise mindestens einen Faktor 2, größer ist als der Innendurchmesser ist. Durch die so erreichte dicke Wandstärke des Innenrohrs kann einerseits die Wärmedämmung zwischen erster Leitung (und gegebenenfalls zweite Leitung, sofern sie in der ersten Leitung angeordnet ist) und Ringspalt verbessert werden. Falls die zweite Leitung in der Wand des Innenrohrs geführt werden soll, ist dies nur bei einer entsprechend dicken Wand des Innenrohrs möglich. Hier ist gleichzeitig die zweite Leitung ebenfalls gut vom Ringspalt isoliert und außerdem mechanisch in der Wand des Innenrohrs fixiert, wodurch die zweite Leitung einerseits geschützt ist und andererseits die Wärmeaustauschsonde robust gefertigt ist.

In einer weiteren Ausführungsform besitzt der Ringspalt eine Querschnittsfläche senkrecht zur Strömungsrichtung des Wärmeaustauschmediums, die relativ zur wärmeübertragenden Außenseite des Außenrohrs ein geeignetes Verhältnis von besitzt. Durch diese Flächenverhältnisse wird der Wärmeaustausch zwischen Ringspalt und Umgebung optimiert.

In einer weiteren Ausführungsform umfasst die Wärmeaustauschsonde am zweiten Ende des Außenrohrs separate Anschlüsse zumindest für den Ringspalt und die ersten und zweiten Leitungen. Dadurch können Wärmeaustauschsonden tief in einer Umgebung platziert werden und die Verbindung zu Bereichen außerhalb der Umgebung mittels Verbindungsleitungen hergestellt werden, die an diese Anschlüsse angeschlossen sind.

In einer Ausführungsform ist die zweite Leitung mit einer Pumpe verbunden. Damit kann das Wärmeaustauschmedium im Rücklauf mit einem einstellbaren Druck rückgeführt werden, um eine bestimmte Strömungsgeschwindigkeit im Rücklauf einzustellen. Vorzugsweise kann dabei die Pumpe durch das Innenrohr gezogen werden. Dies minimiert den Wartungsaufwand im Falle eines Versagens oder einer benötigten Wartung der Pumpe. Hierbei kann die Pumpe eine Rohrpumpe sein.

In einer weiteren Ausführungsform ist die Wärmeaustauschsonde eine Erdwärmesonde und die Umgebung Erdreich. Wärmeübertrag aus oder auf das Erdreich als Umgebung ist vorteilhaft, da das Erdreich je nach Ort sehr unterschiedliche und über das Jahr variierende Temperaturen für Wärmeeintrag und Wärmeentzug besitzen kann.

Die Erfindung bezieht sich des Weiteren auf eine Anlage zum wahlweisen Wärmeentzug oder Wärmeeintrag aus oder in eine Umgebung umfassend mindestens eine erfindungsgemäße Wärmeaustauschsonde zur Einbringung in diese Umgebung sowie geeignete Komponenten angeschlossen über geeignet ausgestaltete Versorgungsleitungen an einen Ringspalt, an eine erste Leitung und an eine zweite Leitung der jeweiligen Wärmeaustauschsonde zur Einbringung eines Wärmeaustauschmediums in die jeweilige Wärmeaustauschsonde und zur Rückführung des Wärmeaustauschmediums aus der Wärmeaustauschsonde heraus, wobei die Komponenten dafür vorgesehen sind, die dafür benötigten Drücke an den Versorgungsleitungen sowie eine Zufuhr und/oder Abfuhr von Wärme an und/oder aus dem Wärmeleitungsmediums zu gewährleisten. Hierbei können eine oder mehrere Wärmeaustauschsonden parallel oder in Reihe oder in einer Mischung daraus betrieben werden.

Die Anlage ermöglicht somit einen effektiven Betrieb der Wärmeaustauschsonde sowohl zum Wärmeentzug aus einer Umgebung als auch für einen Wärmeeintrag in die Umgebung gleichermaßen und ist obendrein einfach aufgebaut.

In einer Ausführungsform der Anlage bilden die Komponenten, die Verbindungsleitungen und die Wärmeaustauschsonde(n) einen geschlossenen Kreislauf für das Wärmeaustauschmedium, wobei die Komponenten mindestens einen Kompressor und/oder einen Wärmeüberträger und/oder eine Drossel und/oder eine Pumpe umfassen. Ein geschlossener Kreislauf ermöglicht einen minimierten Materialaufwand beim Wärmeaustauschmedium und verringert Wärmeverluste im Betrieb der Anlage.

In einer weiteren Ausführungsform ist das Wärmeübertragungsmedium ein zweiphasiges Medium, das geeignet ist, während eines Wärmeaustauschprozesses in der Wärmeaustauschsonde von einer Phase in die andere Phase überzugehen, vorzugsweise ist das Wärmeübertragungsmedium beispielsweis CO2 oder ein anderes Medium.

Die Erfindung bezieht sich des Weiteren auf ein Verfahren zum wahlweisen Wärmeentzug oder Wärmeeintrag aus oder in eine Umgebung mit einer Umgebungstemperatur mit einer erfindungsgemäßen Anlage umfassend mindestens eine erfindungsgemäße Wärmeaustauschsonde, umfassend wahlweise je nach Nutzung derselben Wärmeaustauschsonde die Schritte
- Zuführen eines Wärmeaustauschmediums mit einer Medientemperatur kleiner als die Umgebungstemperatur durch eine erste Leitung zu einem Ringspalt der Wärmeaustauschsonde für den gewünschten Wärmeentzug aus der Umgebung der Wärmeaustauschsonde;
- Erwärmen des Wärmeaustauschmediums im Ringspalt der Wärmeaustauschsonde; und
- Rückführen des erwärmten Wärmeaustauschmediums durch den Ringspalt; oder
- Zuführen des Wärmeaustauschmediums mit einer Medientemperatur höher als die Umgebungstemperatur durch den Ringspalt der Wärmeaustauschsonde zur zweiten Leitung für den gewünschten Wärmeeintrag in die Umgebung der Wärmeaustauschsonde;
- Abkühlen des Wärmeaustauschmediums im Ringspalt der Wärmeaustauschsonde; und
- Rückführen des abgekühlten Wärmeaustauschmediums durch die zweite Leitung.

In einer Ausführungsform des Verfahrens führt der Schritt des Erwärmens zu einem Verdampfen des vorher flüssigen Wärmeaustauschmediums und/oder der Schritt des Abkühlens zu einem Kondensieren des vorher gasförmigen Wärmeaustauschmediums führen.

In einer Ausführungsform des Verfahrens ist bei einem Wechseln eines Betriebsmodus der Anlage vom Wärmeentzug aus der Umgebung zum Wärmeeintrag in die Umgebung oder umgekehrt ein Betreiben von Komponenten der Anlage angeschlossen über geeignet ausgestaltete Versorgungsleitungen an den Ringspalt, an die erste Leitung und an die zweite Leitung der jeweiligen Wärmeaustauschsonde gemäß dem Verfahren geeignet angepasst.

### Kurze Beschreibung der Abbildungen

Diese und andere Aspekte der Erfindung werden im Detail in den Abbildungen wie folgt gezeigt.
- Fig.1:: eine Ausführungsform einer Wärmeaustauschsonde im Schnitt senkrecht zur Längsrichtung der Wärmeaustauschsonde für solche Sonden mit der zweiten Leitung (a) angeordnet in der ersten Leitung, (b) angeordnet in der Wand des Innenrohres, (c) angeordnet im Ringspalt und nicht Teil der vorliegenden Erfindung und (d) angeordnet auf der Außenwand des Außenrohres und auch nicht Teil der vorliegenden Erfindung;
- Fig.2:: eine Ausführungsform der erfindungsgemäßen Wärmeaustauschsonde im Bereich des ersten Endes im seitlichen Schnitt;
- Fig.3:: eine Ausführungsform der erfindungsgemäßen Anlage mit einer Wärmeaustauschsonde eingebracht in den Erdboden;
- Fig.4:: eine Ausführungsform des erfindungsgemäßen Verfahrens zum wahlweisen Wärmeentzug oder Wärmeeintrag aus oder in eine Umgebung.

### Detaillierte Beschreibung der Ausführungsbeispiele

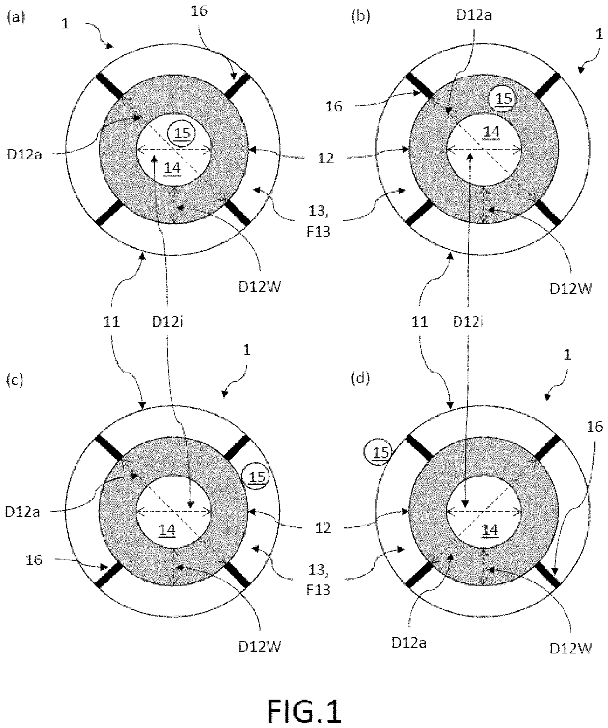

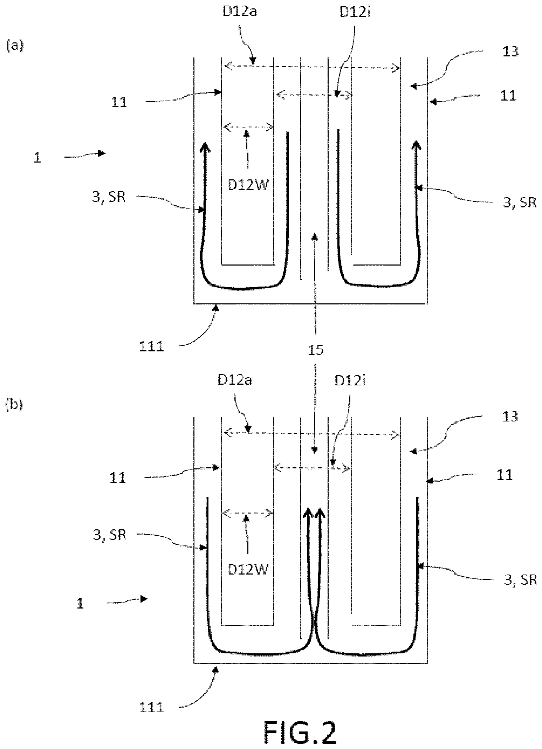

Fig.1 zeigt eine Ausführungsform einer Wärmeaustauschsonde 1 im Schnitt senkrecht zur Längsrichtung der Wärmeaustauschsonde 1 für solche Sonden mit der zweiten Leitung 15 (a) angeordnet in der ersten Leitung 14, (b) angeordnet in der Wand des Innenrohres 12, (c) angeordnet im Ringspalt 13 und nicht Teil der vorliegenden Erfindung und (d) angeordnet auf der Außenseite 11a des Außenrohres 11 und auch nicht Teil der vorliegenden Erfindung. Die Wärmeaustauschsonde 1 umfasst ein Außenrohr 11 mit einem ersten und zweiten Ende 111, 112 und ein im Außenrohr 11 angeordnetes sich entlang des Außenrohrs 11 erstreckendes Innenrohr 12 mit einem geeigneten Außendurchmesser D12a zur Bildung eines Ringspaltes 13 zwischen Innen- und Außenrohr 11, 12. Der Ringspalt 13 umläuft die gesamte Außenseite 12a des Innenrohrs 12. Das Innenrohr 12 bildet mit seiner Innenseite 12i eine innere erste Leitung 14. Die Wärmeaustauschsonde 1 umfasst des Weiteren eine zusätzliche zweite Leitung 15 separat von der ersten Leitung 14, wobei die ersten und zweiten Leitungen 14, 15 zumindest im Bereich des ersten Endes 111 in geeigneter Weise mit dem Ringspalt 13 verbunden sind (siehe beispielsweise Ausführungsbeispiel in Figur 2). In den hier gezeigten Ausführungsformen sind die geometrischen Verhältnisse von Innen- und Außenrohr 12,11 sowie der zweiten Leitung 15 identisch, was bei anderen Ausführungsformen im Rahmen der vorliegenden Erfindung aber nicht so sein muss. Sofern die zweite Leitung 15 innerhalb der ersten Leitung 14 verläuft, muss der Querschnitt der zweiten Leitung 15 natürlich bezüglich Form und Größe in die erste Leitung 14 hineinpassen. Sofern die zweite Leitung 15 innerhalb der Wand des Innenrohrs 11 verläuft, muss die Wand eine Wanddicke D12W besitzen, die groß genug ist, um eine Führung der zweiten Leitung 15 in der Wand des Innenrohrs 12 zu ermöglichen. Sofern die zweite Leitung 15 innerhalb des Ringspalts 13 verläuft, muss der Querschnitt der zweiten Leitung 15 natürlich bezüglich Form und Größe in den Ringspalt 13 hineinpassen. Sofern die zweite Leitung 15 auf der Außenseite 11a des Außenrohrs 11 verläuft, gibt es keine durch die Bauart der Wärmeaustauschsonde 1 bedingte geometrische Einschränkung, sofern eine Verbindung zum Ringspalt 13 vorzugsweise im Bereich des ersten Endes 111 gewährleistet ist. In dieser Ausführungsform ist zudem das Innenrohr 12 mit dem Außenrohr 11 über geeignete Verbindungselemente 16 (hier ausgeführt als Stifte) verbunden, wobei die Verbindungselemente 16 hier das Innenrohr 12 im Außenrohr 11 zentrieren, um umlaufend eine definierte Querschnittsfläche F13 des Ringspaltes 13 zur Strömungsrichtung SR des Wärmeaustauschmediums 3 zu gewährleisten. Das Innenrohr 12 kann dabei aus einem leichten Material mit oder ohne Hohlräume innerhalb des Materials gefertigt sein, wobei das leichte Material Kunststoff oder vorzugsweise ein geschlossener Schaum sein kann. Hierbei besitzt das Innenrohr 12 zum Außendurchmesser D12a einen Innendurchmesser D12i, wobei der Außendurchmesser D12a mindestens einen Faktor 1,5, vorzugsweise mindestens einen Faktor 2, größer ist als der Innendurchmesser sein kann. Hierbei besitzt der Ringspalt 13 eine Querschnittsfläche F13 senkrecht zur Strömungsrichtung SR des Wärmeaustauschmediums 3, die relativ zur wärmeübertragenden Außenseite 11a des Außenrohrs 11 ein auf die jeweiligen Rahmenbedingungen geeignet angepasstes Verhältnis besitzt. Vorzugsweise ist der Ringspalt ein gegenüber der wärmeübertragenden Außenseite enger Ringspalt.

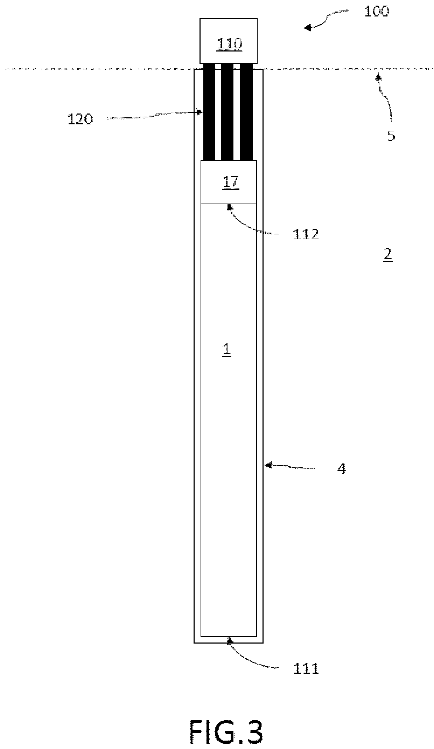

Fig.2 zeigt eine Ausführungsform der erfindungsgemäßen Wärmeaustauschsonde 1 im Bereich des ersten Endes 111 im seitlichen Schnitt. Hierbei ist die Wärmeaustauschsonde 1 so ausgestaltet, dass bei einem gewünschten Wärmeentzug aus der Umgebung 2 die Zufuhr des Wärmeaustauschmediums 3 durch die erste Leitung 14 zum Ringspalt 13 und die nachfolgende Rückführung des Wärmeaustauschmediums 3 durch den Ringspalt 13 zu dem zweiten Ende 112 (siehe Figur 3) erfolgt. Hierbei kann die zweite Leitung 15 ohne Funktion bleiben, was eine Modifikation von Anschlüssen 17 und Komponenten 110 zum umgekehrten Betrieb der Wärmeaustauschsonde 1 überflüssig macht. Bei einem gewünschten Wärmeeintrag in die Umgebung 2 der Wärmeaustauschsonde 1 erfolgt die Zuführung des Wärmeaustauschmediums 3 durch den Ringspalt 13 zur zweiten Leitung 14 und die Rückführung des Wärmeaustauschmediums 3 zum zweiten Ende 112 (siehe Figur 3) durch die zweite Leitung 15. In beiden Fällen wird die Strömungsrichtung SR des Wärmeaustauschmediums3 an ersten Ende 111 des Außenrohrs 11 umgedreht. Ringspalt 13 und erste und zweite Leitungen 14, 15 sind in diesem Ausführungsbeispiel im Bereich des ersten Endes 111 dadurch miteinander verbunden, indem das erste Ende des Außenrohrs 11 ein geschlossenes Ende ist und sowohl der Ringspalt 13, das Innenrohr 11 als erste Leitung 14 als auch die zweite Leitung 15 zum ersten Ende 111 hin offen sind und somit das Wärmeaustauschmedium 3 ungehindert im ersten Ende 111 austauschen können. In anderen Ausführungsformen kann die Verbindung zwischen Ringspalt 13 und den ersten und zweiten Leitungen 14, 15 auch anders ausgestaltet sein.

Fig.3 zeigt eine Ausführungsform der erfindungsgemäßen Anlage 100 mit einer Wärmeaustauschsonde 1 eingebracht in ein Bohrloch 4 im Erdboden als Umgebung 2. Die Anlage 100 zum wahlweisen Wärmeentzug oder Wärmeeintrag aus oder in die Umgebung 2 umfasst in dieser Ausführungsform eine erfindungsgemäße Wärmeaustauschsonde 1 sowie geeignete Komponenten 110 angeschlossen über geeignet ausgestaltete Versorgungsleitungen 120 an den Ringspalt 13, die erste Leitung 14 und die zweite Leitung 15 der Wärmeaustauschsonde 1, in das über die Komponenten 110 und die Verbindungsleitungen 120 das Wärmeaustauschmedium 3 eingebracht (Zulauf) und rückgeführt (Rücklauf) wird, wobei die Komponenten 110 dafür vorgesehen sind, die dafür benötigten Drücke an den Versorgungsleitungen 120 sowie eine Zufuhr und/oder Abfuhr von Wärme an und/oder aus dem Wärmeleitungsmediums 3 zu gewährleisten. Die Länge der Erdwärmesonde 1 hängt von der jeweiligen Anwendung ab und kann je nach Anwendung unterschiedlich sein. Die Komponenten 110 sind vorzugsweise zumindest zum Teil oberhalb der Erdoberfläche 5 für eine bessere Zugänglichkeit angeordnet. Hierbei bilden die Komponenten 110, die Verbindungsleitungen 120 und die Wärmeaustauschsonde 1 einen geschlossenen Kreislauf für das Wärmeaustauschmedium 3, wobei die Komponenten 110 mindestens einen Kompressor und/oder einen Wärmeüberträger (Wärmetauscher) und/oder eine Drossel und/oder eine Pumpe umfassen. Hierbei weist die Wärmeaustauschsonde 1 am zweiten Ende 112 des Außenrohrs 11 ("oben") separate Anschlüsse 17 zumindest für den Ringspalt 13 und die ersten und zweiten Leitungen 14, 15 auf, mit denen sie zu dem Verbindungsleitungen 120 verbunden ist. Hierbei ist in dieser Ausführungsform die zweite Leitung 15 mit einer Pumpe 110 verbunden, vorzugsweise kann die Pumpe 110 durch das Innenrohr 12 der Wärmeaustauschsonde 1 bis zur Erdoberfläche 5 für eine bessere Wartung gezogen werden.

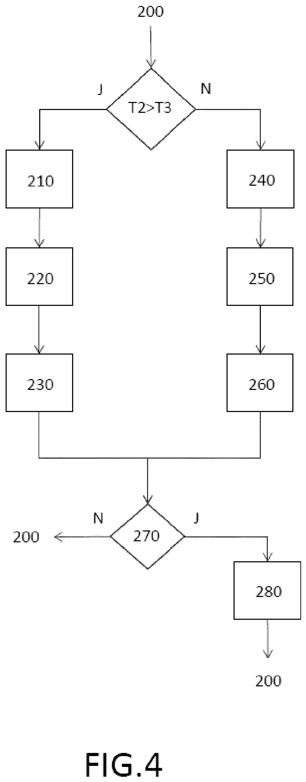

Fig.4 zeigt eine Ausführungsform des erfindungsgemäßen Verfahrens 200 zum wahlweisen Wärmeentzug oder Wärmeeintrag aus oder in eine Umgebung 2 mit einer Umgebungstemperatur T2 mit einer erfindungsgemäßen Anlage 100 (siehe Fig.3) umfassend mindestens eine erfindungsgemäßen Wärmeaustauschsonde (1 (siehe Figuren 1 und 2), umfassend wahlweise je nach Nutzung derselben Wärmeaustauschsonde 1 im Falle der Umgebungstemperatut T2 größer der Medientemperatur des Wärmeaustauschmediums "J" (Wärmeentzug aus der Umgebung) die Schritte des Zuführens 210 eines Wärmeaustauschmediums 3 mit einer Medientemperatur T3 kleiner als die Umgebungstemperatur T2 durch eine erste Leitung 14 zu einem Ringspalt 13 der Wärmeaustauschsonde 1 für den gewünschten Wärmeentzug aus der Umgebung 2 der Wärmeaustauschsonde 1; des Erwärmens 220 des Wärmeaustauschmediums 3 im Ringspalt 13 der Wärmeaustauschsonde 1; und des Rückführens 230 des erwärmten Wärmeaustauschmediums durch den Ringspalt; oder im Falle der Umgebungstemperatur T2 kleiner der Medientemperatur des Wärmeaustauschmediums "N" (Wärmeeintrag in die Umgebung) die Schritte des Zuführens 240 des Wärmeaustauschmediums 3 mit einer Medientemperatur T3 höher als die Umgebungstemperatur T2 durch den Ringspalt 13 der Wärmeaustauschsonde 1 zur zweiten Leitung 15 für den gewünschten Wärmeeintrag in die Umgebung 2 der Wärmeaustauschsonde 1; des Abkühlens 250 des Wärmeaustauschmediums 3 im Ringspalt 13 der Wärmeaustauschsonde 1; und des Rückführens 260 des abgekühlten Wärmeaustauschmediums 3 durch die zweite Leitung 15. Hierbei kann der Schritt des Erwärmens 220 zu einem Verdampfen des vorher flüssigen Wärmeaustauschmediums 3 und/oder der Schritt des Abkühlens 250 zu einem Kondensieren der vorher gasförmigen Wärmeaustauschmediums 3 führen. Bei einem Wechseln 270 eines Betriebsmodus der Anlage 100 vom Wärmeentzug aus der Umgebung zum Wärmeeintrag in die Umgebung oder umgekehrt ("J") wird ein Betreiben 280 von Komponenten 110 der Anlage 100 angeschlossen über geeignet ausgestaltete Versorgungsleitungen 120 an den Ringspalt 13, an die erste Leitung 14 und an die zweite Leitung 15 der jeweiligen Wärmeaustauschsonde gemäß dem Verfahren 200 geeignet angepasst.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### LISTE DER BEZUGSZEICHEN

- 1: Wärmeaustauschsonde
- 11: Außenrohr
- 11a: Außenseite des Außenrohrs
- 111: erstes Ende
- 112: zweites Ende
- 12: Innenrohr
- 12i: Innenseite des Innenrohrs
- 12W: Wand des Innenrohrs
- 13: Ringspalt zwischen Außen- und Innenrohr
- 14: erste Leitung
- 15: zweite Leitung
- 16: Verbindungselemente zwischen Innenrohr und Außenrohr
- 17: Anschlüsse zumindest für Ringspalt und erste und zweite Leitungen
- 2: Umgebung
- 3: Wärmeaustauschmedium
- 4: Bohrloch
- 5: Erdoberfläche
- 100: Anlage zum wahlweisen Wärmeentzug oder Wärmeeintrag aus oder in eine Umgebung
- 110: Komponenten der Anlage, beispielsweise eine Pumpe
- 120: Versorgungsleitungen (zur Wärmeaustauschsonde)
- 200: Verfahren zum wahlweisen Wärmeentzug oder Wärmeeintrag aus oder in eine Umgebung
- 210: Zuführen eines Wärmeaustauschmediums durch die erste Leitung zum Ringspalt für den Wärmeentzug aus der Umgebung
- 220: Erwärmen des Wärmeaustauschmediums im Ringspalt
- 230: Rückführen des erwärmten Wärmeaustauschmediums durch den Ringspalt
- 240: Zuführen des Wärmeaustauschmediums durch den Ringspalt zur zweiten Leitung für einen Wärmeeintrag in die Umgebung
- 250: Abkühlen des Wärmeaustauschmediums im Ringspalt
- 260: Rückführen des abgekühlten Wärmeaustauschmediums durch die zweite Leitung
- 270: Wechseln eines Betriebsmodus der Anlage vom Wärmeentzug aus der Umgebung zum Wärmeeintrag in die Umgebung oder umgekehrt
- 280: Betrieben von Komponenten der Anlage

- D12a: Außendurchmesser des Innenrohrs
- D12i: Innendurchmesser des Innenrohrs
- D12W: Wanddicke des Innenrohrs
- F13: Querschnittsfläche des Ringspaltes senkrecht zur Strömungsrichtung des Wärmeaustauschmediums
- SR: Strömungsrichtung des Wärmeaustauschmediums
- T2: Umgebungstemperatur
- T3: Medientemperatur

## Patentansprüche

1. Eine Wärmeaustauschsonde (1) zur Einbringung in eine Umgebung (2) wahlweise für einen Wärmeentzug oder einen Wärmeeintrag aus oder in die Umgebung (2) um die Wärmeaustauschsonde (1) herum, umfassend ein Außenrohr (11) mit einem ersten und zweiten Ende (111, 112) und ein im Außenrohr (11) angeordnetes sich entlang des Außenrohrs (11) erstreckendes Innenrohr (12) mit einem geeigneten Außendurchmesser (D12a) zur Bildung eines Ringspaltes (13) zwischen Innen- und Außenrohr (11, 12), wobei das Innenrohr (12) mit seiner Innenseite (12i) eine innere erste Leitung (14) bildet und die Wärmeaustauschsonde (1) eine zusätzliche zweite Leitung (15) separat von der ersten Leitung (14) umfasst, wobei die ersten und zweiten Leitungen (14, 15) zumindest im Bereich des ersten Endes (111) in geeigneter Weise mit dem Ringspalt (13) verbunden sind und die Wärmeaustauschsonde (1) bei einem gewünschten Wärmeentzug aus der Umgebung (2) zur Zufuhr eines Wärmeaustauschmediums (3) durch die erste Leitung (14) zum Ringspalt (13) und zur Rückführung des Wärmeaustauschmediums (3) durch den Ringspalt (13) zu dem zweiten Ende (112) und bei einem gewünschten Wärmeeintrags in die Umgebung (2) die Wärmeaustauschsonde (1) zur Zuführung des Wärmeaustauschmediums (3) durch den Ringspalt (13) zur zweiten Leitung (15) und zur Rückführung des Wärmeaustauschmediums (3) zum zweiten Ende (112) durch die zweite Leitung (15) ausgestaltet ist,
**dadurch gekennzeichnet,**
**dass** die zweite Leitung (15) innerhalb der ersten Leitung (14) angeordnet ist oder das Innenrohr (12) eine Wand (12W) mit geeigneter Wanddicke (D12W) umfasst und die zweite Leitung (15) innerhalb der Wand des Innenrohrs (12) angeordnet ist.

2. Die Wärmeaustauschsonde (1) nach einem der Ansprüche 1,
**dadurch gekennzeichnet,**
**dass** das Innenrohr (12) mit dem Außenrohr (11) über geeignete Verbindungselemente (16) verbunden ist, vorzugsweise zentrieren die Verbindungselemente (16) das Innenrohr (12) im Außenrohr (11).

3. Die Wärmeaustauschsonde (1) nach einem der voranstehenden Ansprüche,
**dadurch gekennzeichnet,**
**dass** das Innenrohr (12) aus einem leichten Material mit oder ohne Hohlräume innerhalb des Materials gefertigt ist.

4. Die Wärmeaustauschsonde (1) nach Anspruch 3,
**dadurch gekennzeichnet,**
**dass** das leichte Material Kunststoff, vorzugsweise ein geschlossener Schaum, ist.

5. Die Wärmeaustauschsonde (1) nach einem der voranstehenden Ansprüche, **dadurch gekennzeichnet,**
**dass** das Innenrohr (12) zum Außendurchmesser (D12a) einen Innendurchmesser (D12i) besitzt, wobei der Außendurchmesser (D12a) mindestens einen Faktor 1,5, vorzugsweise mindestens einen Faktor 2, größer ist als der Innendurchmesser ist.

6. Die Wärmeaustauschsonde (1) nach einem der voranstehenden Ansprüche,
**dadurch gekennzeichnet,**
**dass** die Wärmeaustauschsonde (1) am zweiten Ende (112) des Außenrohrs (11) separate Anschlüsse (17) zumindest für den Ringspalt (13) und die ersten und zweiten Leitungen (14, 15) umfasst.

7. Die Wärmeaustauschsonde (1) nach einem der voranstehenden Ansprüche,
**dadurch gekennzeichnet,**
**dass** die zweite Leitung (15) mit einer Pumpe (110) verbunden ist, vorzugsweise kann die Pumpe (110) durch das Innenrohr (12) gezogen werden.

8. Die Wärmeaustauschsonde (1) nach einem der voranstehenden Ansprüche,
**dadurch gekennzeichnet,**
**dass** die Wärmeaustauschsonde eine Erdwärmesonde und die Umgebung Erdreich ist.

9. Eine Anlage (100) zum wahlweisen Wärmeentzug oder Wärmeeintrag aus oder in eine Umgebung (2) umfassend mindestens eine Wärmeaustauschsonde (1) nach Anspruch 1 zur Einbringung in diese Umgebung (2) sowie geeignete Komponenten (110) angeschlossen über geeignet ausgestaltete Versorgungsleitungen (120) an einen Ringspalt (13), an eine erste Leitung (14) und an eine zweite Leitung (15) der jeweiligen Wärmeaustauschsonde (1) zur Einbringung eines Wärmeaustauschmediums (3) in die jeweilige Wärmeaustauschsonde (1) und zur Rückführung des Wärmeaustauschmediums (3) aus der Wärmeaustauschsonde (1) heraus, wobei die Komponenten (110) dafür vorgesehen sind, die dafür benötigten Drücke an den Versorgungsleitungen (120) sowie eine Zufuhr und/oder Abfuhr von Wärme an und/oder aus dem Wärmeleitungsmediums (3) zu gewährleisten.

10. Die Anlage (100) nach Anspruch 9, **dadurch gekennzeichnet,**
**dass** die Komponenten (110), die Verbindungsleitungen (120) und die Wärmeaustauschsonde (1) einen geschlossenen Kreislauf für das Wärmeaustauschmedium (3) bilden, wobei die Komponenten (110) mindestens einen Kompressor und/oder einen Wärmeüberträger und/oder eine Drossel und/oder eine Pumpe umfassen.

11. Die Anlage (100) nach Anspruch 9 oder 10,
**dadurch gekennzeichnet,**
**dass** das Wärmeübertragungsmedium (3) ein zweiphasiges Medium ist, das geeignet ist, während eines Wärmeaustauschprozesses in der Wärmeaustauschsonde (1) von einer Phase in die andere Phase überzugehen.

12. Ein Verfahren (200) zum wahlweisen Wärmeentzug oder Wärmeeintrag aus oder in eine Umgebung (2) mit einer Umgebungstemperatur (T2) mit einer Anlage (100) nach Anspruch 10 umfassend mindestens eine Wärmeaustauschsonde (1) nach Anspruch 1, umfassend wahlweise je nach Nutzung derselben Wärmeaustauschsonde (1) die Schritte
- Zuführen (210) eines Wärmeaustauschmediums (3) mit einer Medientemperatur (T3) kleiner als die Umgebungstemperatur (T2) durch eine erste Leitung (14) zu einem Ringspalt (13) der Wärmeaustauschsonde (1) für den gewünschten Wärmeentzug aus der Umgebung (2) der Wärmeaustauschsonde (1);
- Erwärmen (220) des Wärmeaustauschmediums (3) im Ringspalt (13) der Wärmeaustauschsonde (1); und
- Rückführen (230) des erwärmten Wärmeaustauschmediums durch den Ringspalt;
Oder
- Zuführen (240) des Wärmeaustauschmediums (3) mit einer Medientemperatur (T3) höher als die Umgebungstemperatur (T2) durch den Ringspalt (13) der Wärmeaustauschsonde (1) zur zweiten Leitung (15) für den gewünschten Wärmeeintrag in die Umgebung (2) der Wärmeaustauschsonde (1);
- Abkühlen (250) des Wärmeaustauschmediums (3) im Ringspalt (13) der Wärmeaustauschsonde (1); und
- Rückführen (260) des abgekühlten Wärmeaustauschmediums (3) durch die zweite Leitung (15).

13. Das Verfahren (200) nach Anspruch 12, wobei der Schritt des Erwärmens (220) zu einem Verdampfen des vorher flüssigen Wärmeaustauschmediums (3) und/oder der Schritt des Abkühlens (250) zu einem Kondensieren der vorher gasförmigen Wärmeaustauschmediums (3) führen.

14. Das Verfahren (200) nach Anspruch 12 oder 13, wobei bei einem Wechseln (270) eines Betriebsmodus der Anlage (100) vom Wärmeentzug aus der Umgebung zum Wärmeeintrag in die Umgebung oder umgekehrt ein Betreiben (280) von Komponenten (110) der Anlage (100) angeschlossen über geeignet ausgestaltete Versorgungsleitungen (120) an den Ringspalt (13), an die erste Leitung (14) und an die zweite Leitung (15) der jeweiligen Wärmeaustauschsonde gemäß dem Verfahren (200) geeignet angepasst wird.

## Claims

1. A heat exchange probe (1) for introduction into an environment (2), either for heat extraction or for heat input from or into the environment (2) around the heat exchange probe (1), comprising an outer tube (11) having a first and second end (111, 112) and an inner tube (12) arranged inside the outer tube (11) and extending along the outer tube (11) having a suitable outer diameter (D12a) for forming an annular gap (13) between inner and outer tube (11, 12), wherein the inner tube (12) forms an inner first line (14) with its inner side (12i) and the heat exchange probe (1) additionally comprises a second line (15) separate from the first line (14), wherein the first and second lines (14, 15) are connected to the annular gap (13) in a suitable manner at least in the area of the first end (111), and in case of a desired heat extraction from the environment (2) the heat exchange probe (1) is configured to supply a heat exchange medium (3) through the first line (14) to the annular gap (13) and to return the heat exchange medium (3) through the annular gap (13) to the second end (112), and, in case of a desired heat input into the environment (2), the heat exchange probe (1) is configured to supply the heat exchange medium (3) through the annular gap (13) to the second line (15) and to return the heat exchange medium (3) to the second end (112) through the second line (15),
**characterized in that**
the second line (15) is arranged inside the first line (14) or the inner tube (12) comprises a wall (12W) with a suitable wall thickness (D12W) and the second line (15) is arranged inside the wall of the inner tube (12).

2. The heat exchange probe (1) according to claim 1,
**characterized in that**
the inner tube (12) is connected to the outer tube (11) via suitable connection elements (16), the connection elements (16) preferably center the inner tube (12) inside the outer tube (11).

3. The heat exchange probe (1) according to any one of the preceding claims, **characterized in that**
the inner tube (12) is made of a light material with or without cavities within the material.

4. The heat exchange probe (1) according to claim 3,
**characterized in that**
the light material is plastic, preferably a closed foam.

5. The heat exchange probe (1) according to any one of the preceding claims, **characterized in that**
the inner tube (12) has an inner diameter (D12i) to the outer diameter (D12a), wherein the outer diameter (D12a) is larger than the inner diameter by at least a factor of 1.5, preferably at least a factor of 2.

6. The heat exchange probe (1) according to any one of the preceding claims, **characterized in that**
the heat exchange probe (1) comprises at the second end (112) of the outer tube (11) separate connections (17) at least for the annular gap (13) and the first and second lines (14, 15).

7. The heat exchange probe (1) according to any one of the preceding claims, **characterized in that**
the second line (15) is connected to a pump (110), the pump (110) is preferably adapted to be pulled through the inner tube (12).

8. The heat exchange probe (1) according to any one of the preceding claims, **characterized in that**
the heat exchange probe is a geothermal probe and the environment is ground.

9. A system (100) either for heat extraction or for heat input from or into an environment (2), comprising at least one heat exchange probe (1) according to claim 1 for introduction into said environment (2) as well as suitable components (110) connected via suitably designed supply lines (120) to an annular gap (13), to a first line (14) and to a second line (15) of the respective heat exchange probe (1) for introduction of a heat exchange medium (3) into the respective heat exchange probe (1) and for returning the heat exchange medium (3) from the heat exchange probe (1), wherein the components (110) are provided to ensure the required pressures at the supply lines (120) as well as a supply and/or discharge of heat to and/or from the heat exchange medium (3).

10. The system (100) according to claim 9,
**characterized in that**
the components (110), the connection lines (120) and the heat exchange probe (1) form a closed circuit for the heat exchange medium (3), wherein the components (110) comprise at least one compressor and/or a heat exchanger and/or a throttle and/or a pump.

11. The system (100) according to claim 9 or 10,
**characterized in that**
the heat exchange medium (3) is a two-phase medium which is suitable to pass during a heat exchange process in the heat exchange probe (1) from one phase to the other phase.

12. A method (200) either for heat extraction or heat input from or into an environment (2) with an ambient temperature (T2) with a system (100) according to claim 10, comprising at least one heat exchange probe (1) according to claim 1, optionally comprising, depending on usage of the same heat exchange probe (1), the following steps:
- supplying (210) a heat exchange medium (3) with a medium temperature (T3) smaller than the ambient temperature (T2) through a first line (14) to an annular gap (13) of the heat exchange probe (1) for the desired heat extraction from the environment (2) of the heat exchange probe (1);
- heating (220) the heat exchange medium (3) in the annular gap (13) of the heat exchange probe (1); and
- returning (230) the heated heat exchange medium through the annular gap;
or
- supplying (240) the heat exchange medium (3) with a medium temperature (T3) higher than the ambient temperature (T2) through the annular gap (13) of the heat exchange probe (1) to the second line (15) for the desired heat input into the environment (2) of the heat exchange probe (1);
- cooling (250) the heat exchange medium (3) in the annular gap (13) of the heat exchange probe (1); and
- returning (260) the cooled heat exchange medium (3) through the second line (15).

13. The method (200) according to claim 12, wherein the step of heating (220) results in an evaporation of the previously liquid heat exchange medium (3) and/or the step of cooling (250) results in a condensation of the previously gaseous heat exchange medium (3).

14. The method (200) according to claim 12 or 13, wherein upon changing (270) an operating mode of the system (100) from heat extraction from the environment to heat input into the environment or vice versa, an operation (280) of components (110) of the system (100) connected via suitably designed supply lines (120) to the annular gap (13), to the first line (14) and to the second line (15) of the respective heat exchange probe according to the method (200) is suitably adapted.

## Revendications

1. Sonde d'échange de chaleur (1) pour introduction dans un environnement (2), au choix pour un prélèvement de chaleur de l'environnement (2) ou un apport de chaleur à l'environnement (2) autour de la sonde d'échange de chaleur (1),
comprenant un tube extérieur (11) ayant une première et une seconde extrémité (111, 112) et un tube intérieur (12) disposé dans le tube extérieur (11) et s'étendant le long du tube extérieur (11), ayant un diamètre extérieur (D12a) approprié pour former un espace annulaire (13) entre le tube intérieur et le tube extérieur (11, 12),
le tube intérieur (12) formant avec sa face interne (12i) un premier conduit intérieur (14) et la sonde d'échange de chaleur (1) comprenant un second conduit supplémentaire (15) séparé du premier conduit (14),
les premier et second conduits (14, 15) étant reliés de manière appropriée à l'espace annulaire (13) au moins dans la région de la première extrémité (111), et la sonde d'échange de chaleur (1), dans le cas souhaité d'un prélèvement de chaleur de l'environnement (2), étant configurée pour acheminer un milieu échangeur de chaleur (3) à l'espace annulaire (13) à travers le premier conduit (14) et pour recirculer le milieu échangeur de chaleur (3) à travers l'espace annulaire (13) vers la seconde extrémité (112) et, dans le cas souhaité d'un apport de chaleur à l'environnement (2), la sonde d'échange de chaleur (1) étant configurée pour acheminer le milieu échangeur de chaleur (3) au second conduit (15) à travers l'espace annulaire (13) et pour recirculer le milieu échangeur de chaleur (3) vers la seconde extrémité (112) à travers le second conduit (15),
**caractérisée en ce que**
le second conduit (15) est disposé à l'intérieur du premier conduit (14) ou bien le tube intérieur (12) comprend une paroi (12W) ayant une épaisseur de paroi (D12W) appropriée et le second conduit (15) est disposé à l'intérieur de la paroi du tube intérieur (12).

2. Sonde d'échange de chaleur (1) selon la revendication 1, **caractérisée en ce que**
le tube intérieur (12) est relié au tube extérieur (11) par l'intermédiaire d'éléments de liaison (16) appropriés, de préférence, les éléments de liaison (16) centrent le tube intérieur (12) dans le tube extérieur (11).

3. Sonde d'échange de chaleur (1) selon l'une des revendications précédentes,
**caractérisée en ce que**
le tube intérieur (12) est réalisé dans un matériau léger avec ou sans vides à l'intérieur du matériau.

4. Sonde d'échange de chaleur (1) selon la revendication 3, **caractérisée en ce que**
le matériau léger est une matière plastique, de préférence une mousse à bulles fermées.

5. Sonde d'échange de chaleur (1) selon l'une des revendications précédentes,
**caractérisée en ce que**
le tube intérieur (12) possède, par rapport au diamètre extérieur (D12a), un diamètre intérieur (D12i), le diamètre extérieur (D12a) étant plus grand d'au moins un facteur de 1,5, de préférence d'au moins un facteur de 2, que le diamètre intérieur.

6. Sonde d'échange de chaleur (1) selon l'une des revendications précédentes,
**caractérisée en ce que**
la sonde d'échange de chaleur (1) comprend, à la seconde extrémité (112) du tube extérieur (11), des raccords séparés (17) au moins pour l'espace annulaire (13) et les premier et second conduits (14, 15).

7. Sonde d'échange de chaleur (1) selon l'une des revendications précédentes,
**caractérisée en ce que**
le second conduit (15) est relié à une pompe (110), de préférence la pompe (110) peut être tirée à travers le tube intérieur (12).

8. Sonde d'échange de chaleur (1) selon l'une des revendications précédentes,
**caractérisée en ce que**
la sonde d'échange de chaleur est une sonde géothermique et l'environnement est de la terre.

9. Installation (100) permettant, au choix, le prélèvement de chaleur d'un environnement (2) ou l'apport de chaleur à un environnement (2), comprenant au moins une sonde d'échange de chaleur (1) selon la revendication 1 pour introduction dans cet environnement (2), ainsi que des composants (110) appropriés, raccordés, par l'intermédiaire de conduits d'alimentation (120) de configuration appropriée, à un espace annulaire (13), à un premier conduit (14) et à un second conduit (15) de la sonde d'échange de chaleur (1) respective pour introduction d'un milieu échangeur de chaleur (3) dans la sonde d'échange de chaleur respective (1) et pour recirculation du milieu échangeur de chaleur (3) depuis la sonde d'échange de chaleur (1), les composants (110) étant prévus pour garantir les pressions nécessaires à cet effet aux conduits d'alimentation (120) ainsi qu'un apport de chaleur au milieu échangeur de chaleur (3) et/ou une évacuation de chaleur du milieu échangeur de chaleur (3).

10. Installation (100) selon la revendication 9, **caractérisée en ce que**
les composants (110), les conduits de raccordement (120) et la sonde d'échange de chaleur (1) forment un circuit fermé pour le milieu échangeur de chaleur (3), les composants (110) comprenant au moins un compresseur et/ou un échangeur de chaleur et/ou un étranglement et/ou une pompe.

11. Installation (100) selon la revendication 9 ou 10, **caractérisée en ce que**
le milieu de transfert de chaleur (3) est un milieu biphasique qui est adapté pour passer d'une phase à l'autre au cours d'un processus d'échange de chaleur dans la sonde d'échange de chaleur (1).

12. Procédé (200) permettant, au choix, le prélèvement de chaleur d'un environnement (2) ou l'apport de chaleur à un environnement (2), à une température ambiante (T2), à l'aide d'une installation (100) selon la revendication 10, comprenant au moins une sonde d'échange de chaleur (1) selon la revendication 1, comprenant, au choix selon l'utilisation de ladite sonde d'échange de chaleur (1), les étapes suivantes :
- acheminement (210) d'un milieu échangeur de chaleur (3) à une température de milieu (T3) inférieure à la température ambiante (T2) à travers un premier conduit (14) vers un espace annulaire (13) de la sonde d'échange de chaleur (1) pour le prélèvement de chaleur souhaité de l'environnement (2) de la sonde d'échange de chaleur (1) ;
- réchauffage (220) du milieu échangeur de chaleur (3) dans l'espace annulaire (13) de la sonde d'échange de chaleur (1) ; et
- recirculation (230) du milieu échangeur de chaleur (3) réchauffé à travers l'espace annulaire ;
ou bien
- acheminement (240) du milieu échangeur de chaleur (3) à une température de milieu (T3) supérieure à la température ambiante (T2) à travers l'espace annulaire (13) de la sonde d'échange de chaleur (1) vers le second conduit (15) pour l'apport de chaleur souhaité à l'environnement (2) de la sonde d'échange de chaleur (1) ;
- refroidissement (250) du milieu échangeur de chaleur (3) dans l'espace annulaire (13) de la sonde d'échange de chaleur (1) ; et
- recirculation (260) du milieu échangeur de chaleur (3) refroidi à travers le second conduit (15).

13. Procédé (200) selon la revendication 12, dans lequel
l'étape de réchauffage (220) conduit à une évaporation du milieu échangeur de chaleur (3) précédemment fluide et/ou l'étape de refroidissement (250) conduit à une condensation du milieu échangeur de chaleur (3) précédemment gazeux.

14. Procédé (200) selon la revendication 12 ou 13, dans lequel, lors d'un changement (270) du mode de fonctionnement de l'installation (100) pour passer du prélèvement de chaleur de l'environnement à l'apport de chaleur à l'environnement ou inversement, un fonctionnement (280) de composants (110) de l'installation (100), raccordés par l'intermédiaire de conduits d'alimentation (120) de configuration appropriée, à l'espace annulaire (13), au premier conduit (14) et au second conduit (15) de la sonde d'échange de chaleur respective, est adapté de manière appropriée selon le procédé (200).
